# EUROPEAN PATENT SPECIFICATION

(11) **EP 2 775 566 B1**
(45) Date of publication and mention of the grant of the patent: **02.06.2021**
(21) Application number: 12845378.4
(22) Date of filing: 24.10.2012
(51) Int. Cl.: H01Q 1/48, H01Q 13/08, H01Q 1/22, H01Q 21/28, G01D 11/24, G01D 4/00, H01Q 9/04, H01Q 9/42

(54) **WIRELESS TERMINAL**
DRAHTLOSES ENDGERÄT
TERMINAL SANS FIL

(30) Priority: 31.10.2011 JP 2011238359
(43) Date of publication of application: 10.09.2014
(60) Divisional application: 15177068.2
(73) Proprietor: Panasonic Corporation, Osaka 571-8501 (JP)
(72) Inventor: ANBE, Yuki, Chuo-ku, Osaka 540-6207 (JP); UNO, Hiroyuki, Chuo-ku, Osaka 540-6207 (JP); WATANABE, Takashi, Chuo-ku, Osaka 540-6207 (JP); YOSHIKAWA, Yoshishige, Chuo-ku, Osaka 540-6207 (JP)
(74) Representative: SSM Sandmair
(86) International application number: PCT/JP2012/006806
(87) International publication number: WO 2013/065257

(56) References cited:
- WO-A1-2010/073454
- JP-A- H10 313 212
- JP-A- H11 355 022
- JP-A- 2008 533 934
- US-A1- 2004 070 540
- US-A1- 2006 214 849

## Description

### TECHNICAL FIELD

The present invention relates to a small wireless terminal unit mounted on, e.g., a metering device with a metallic case and having a high antenna performance.

### BACKGROUND ART

In recent years, a structure such as a house or a building has employed an automatic metering system including a meter that measures, e.g., gas or electricity consumption. This meter includes a wireless terminal unit that allows the system to collect data through wireless communications. A communications range of this automatic metering system depends on an antenna performance of the wireless terminal unit of the meter. In other words, the system requires the wireless terminal unit having a highly efficient antenna performance. The wireless terminal unit also requires a small built-in antenna for ease of installation to the meter.

It is suggested that the wireless terminal unit include a planar antenna mounted on a board. This planar antenna includes a ground conductor plate serving as a ground. See PATENT DOCUMENT 1. This ground conductor plate is connected with a short conductor through a wiring pattern of a printed circuit board to serve as the ground of the antenna. The ground conductor plate is disposed between a radiation conductor plate and the printed circuit board. A wireless circuit is disposed on the printed circuit board between the ground conductor plate and the printed circuit board. This configuration enables miniaturization of the wireless terminal unit. A reflective conductor plate in the wireless terminal unit, or a metallic case of, e.g., the meter as a reflective conductor also provides a high antenna performance.

US 2004/0070540 A1 discloses a method of independently modifying the 1/4 and/or the 3/4 wavelength resonant frequency in an open-ended slotted PIFA antenna, an open-ended slotted PIFA antenna comprising an antenna feed and an antenna ground wherein the antenna ground is associated with the antenna short-circuit end, and an open-ended slot having an open-end associated with the antenna open-circuit end, and wherein the antenna ground and the slot are mutually arranged to provide operational variations in the current density between the open and short circuit ends of the antenna and around the perimeter of the slot, and an operational mean current path length between the open and short circuit ends of the antenna and around the perimeter of the open-ended slot, the mean current path length determining the 1/4 and 3/4 wavelength resonant frequencies for the open-ended slotted PIFA antenna, the method comprising determining operational variations in current density around the perimeter of a pre-modified open-ended slotted PIFA antenna and modifying the mean current path length around the perimeter of the pre-modified open-ended slot in regions of comparatively high current density.

### CITATION LIST

### PATENT DOCUMENT

PATENT DOCUMENT 1: Japanese Unexamined Patent Publication No. H10-313212

### SUMMARY OF THE INVENTION

### TECHNICAL PROBLEM

However, PATENT DOCUMENT 1 discloses the planar antenna that requires the reflective conductor plate for a high antenna performance. In other words, the parts of the planar antenna increase in number. The metallic case of the meter instead of the reflective conductor plate also increases a space between the ground conductor plate and the metallic case, thereby providing only a slight improvement in the antenna performance.

It is an object of the present invention to provide a simple, small wireless terminal unit having a high antenna performance on a metallic case of, e.g., a gas meter.

### SOLUTION TO THE PROBLEM

To achieve the object, the present invention provides a wireless terminal unit for wireless communications according to claim 1.

### ADVANTAGES OF THE INVENTION

The present invention provides a wireless terminal unit including a highly efficient small antenna configuration disposed on a wireless circuit board having a perimeter that is more than or equal to 1/2 wavelength and less than or equal to 1 wavelength at an operating frequency. The wireless circuit board is parallel to and is electrically connected with a ground conductor at a predetermined position.

### BRIEF DESCRIPTION OF THE DRAWINGS

FIG. 1 is an exploded perspective view showing a configuration of a wireless terminal unit of a first embodiment of the present invention.
FIG. 2 shows radiation efficiency of the wireless terminal unit in FIG. 1 and three comparison examples.
FIG. 3 is a perspective view showing an alternative example not representing the invention.
FIG. 4 is a perspective view showing a configuration of a wireless terminal unit of another example, not representing the invention.
FIG. 5 shows radiation efficiency of the wireless terminal unit in FIG. 4 and an alternative example.

### DESCRIPTION OF EMBODIMENTS

Preferable embodiments of the present invention will be described in detail below with reference to the drawings.

### First Embodiment

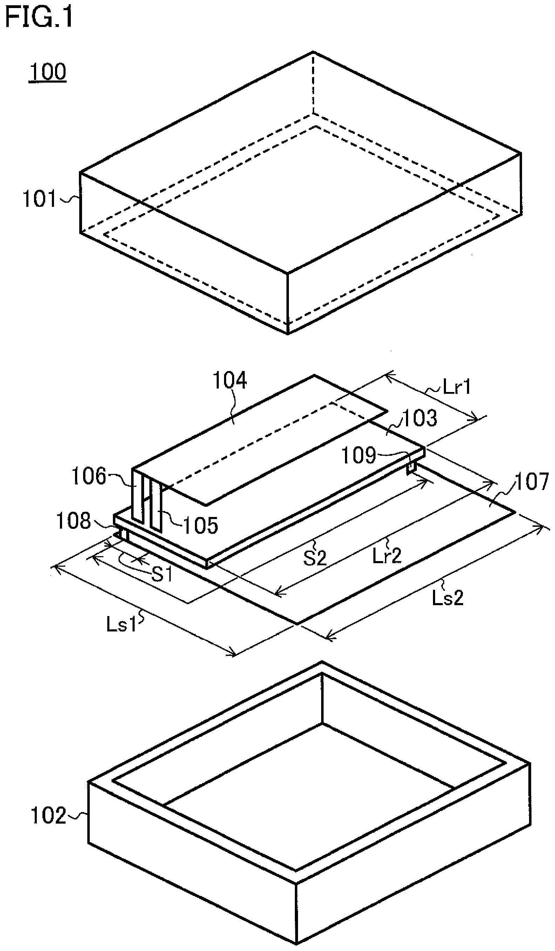

FIG. 1 illustrates a wireless terminal unit 100 of a first embodiment of the present invention. This wireless terminal unit 100 includes a first resin case 101, a second resin case 102, a circuit board 103, a radiation conductor 104, a power supply terminal 105, a short terminal 106, a ground conductor 107, a first ground terminal 108, and a second ground terminal 109.

The first resin case 101 and the second resin case 102 are, for example, hollow cases made of low-loss resin materials such as polypropylene, ABS, etc. These cases include openings, one of which is placed on the other. These openings are fastened with, e.g., screws or welding to serve as a box-shaped case.

The circuit board 103 is, for example, a board having surfaces, both of which are copper surfaces, and having a length Lr1 and a width Lr2. A wireless circuit, a control circuit, etc. are mounted on its surface. The length Lr1 and the width Lr2 constitute a perimeter of the circuit board 103 that is more than or equal to 1/2 wavelength and less than or equal to 1 wavelength at an operating frequency. The radiation conductor 104 is, for example, a sheet metal made of a conductor such as a copper plate. The radiation conductor 104 faces and is parallel to the circuit board 103. The power supply terminal 105 is orthogonal to a plane of the radiation conductor 104. One end of the power supply terminal 105 is electrically connected with the wireless circuit on the circuit board 103. The other end of the power supply terminal 105 is electrically connected with the radiation conductor 104. Similarly to the power supply terminal 105, the short terminal 106 is orthogonal to the plane of the radiation conductor 104. One end of the short terminal 106 is electrically connected with a ground on the circuit board 103. This ground has a copper foil pattern. The other end of the short terminal 106 is electrically connected with the radiation conductor 104. In this manner, the radiation conductor 104, the power supply terminal 105, and the short terminal 106 form a flat inverted-F antenna. The power supply terminal 105 and the short terminal 106 have such widths and a space between them as to achieve impedance matching.

The ground conductor 107 is, for example, a sheet metal having a length Ls1 and a width Ls2. This sheet metal is made of a conductor such as a copper plate. The ground conductor 107 faces and is parallel to a back surface of the circuit board 103, i.e., a surface opposite to the surface above which the radiation conductor 104 is disposed. The ground conductor 107 is larger in plane dimension than the circuit board 103.

The first ground terminal 108 is orthogonal to a plane of the ground conductor 107. One end of the first ground terminal 108 is electrically connected with the ground on the circuit board 103. This ground has the copper foil pattern. The other end of the first ground terminal 108 is electrically connected with the ground conductor 107. The first ground terminal 108 is also disposed on an edge of the circuit board 103. This edge is at a distance S1 from a position in which the power supply terminal 105 is connected with the circuit board 103. The distance S1 is preferably a distance that is, for example, less than or equal to 1/16 wavelength at the operating frequency. In other words, the first ground terminal 108 is positioned near a power supply part for the radiation conductor 104.

Similarly to the first ground terminal 108, the second ground terminal 109 is orthogonal to the plane of the ground conductor 107. One end of the second ground terminal 109 is electrically connected with the ground on the circuit board 103. This ground has the copper foil pattern. The other end of the second ground terminal 109 is electrically connected with the ground conductor 107. The second ground terminal 109 is also disposed on an edge of the circuit board 103. This edge is at a distance S2 from a position in which the first ground terminal 108 is connected with the circuit board 103. The distance S2 is preferably a distance that is, for example, more than or equal to 1/4 wavelength at the operating frequency.

Next, the performance of the flat inverted-F antenna of the wireless device 100 in FIG. 1 will be described. Here, the operating frequency is 868 MHz. In other words, one wavelength is 345 mm. The specific dimensions of the wireless device 100 in FIG. 1 are as follows. The circuit board 103 has the length Lr1 of 28.5 mm (0.082 wavelength), and the width Lr2 of 69.5 mm (0.2 wavelength). The ground conductor 107 has the length Ls1 of 60 mm (0.173 wavelength) and the width Ls2 of 67.5 mm (0.195 wavelength). The distance S1 between the power supply terminal 105 and the first ground terminal 108 is 7 mm (0.02 wavelength). The distance S2 between the first ground terminal 108 and the second ground terminal 109 is 89 mm (0.257 wavelength). A distance between the ground conductor 107 and the metallic case of, e.g., a gas meter is 2 mm (0.005 wavelength). The circuit board 103 has the perimeter of 196 mm (0.564 wavelength), which is more than or equal to 1/2 wavelength and less than or equal to 1 wavelength. The distance S2 between the first ground terminal 108 and the second ground terminal 109 is 89 mm (0.257 wavelength), which is more than or equal to 1/4 wavelength.

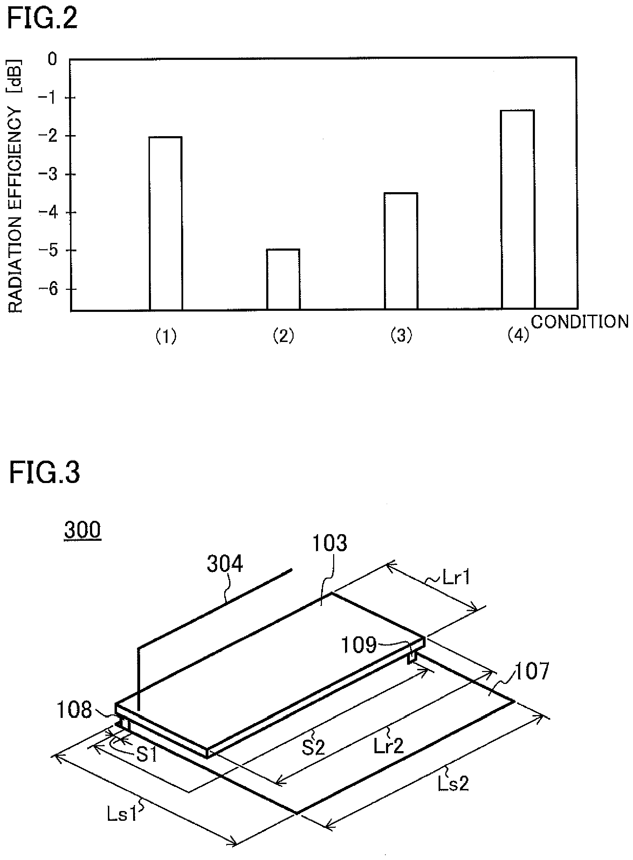

FIG. 2 shows radiation efficiency of the wireless terminal unit 100 in FIG. 1 and three comparison examples. FIG. 2 shows a condition (1) for the radiation efficiency of the first comparison example. Under this condition, the circuit board 103 has a perimeter of less than 1/2 wavelength, and only the first ground terminal 108 is mounted near the power supply point. FIG. 2 also shows a condition (2) for the radiation efficiency of the second comparison example. Under this condition, the circuit board 103 has a perimeter of more than or equal to 1/2 wavelength and less than or equal to 1 wavelength, and only the first ground terminal 108 is mounted near the power supply point. FIG. 2 also shows a condition (3) for the radiation efficiency of the third comparison example. Under this condition, the circuit board 103 has a perimeter of more than or equal to 1/2 wavelength and less than or equal to 1 wavelength, and the distance S2 between the first ground terminal 108 and the second ground terminal 109 is less than 1/4 wavelength. FIG. 2 also shows a condition (4) for the radiation efficiency of this embodiment. Under this condition, the circuit board 103 has a perimeter of more than or equal to 1/2 wavelength and less than or equal to 1 wavelength, and the distance S2 between the first ground terminal 108 and the second ground terminal 109 is more than or equal to 1/4 wavelength.

The conditions (1) and (2) indicate the following. If the circuit board 103 has a perimeter of less than 1/2 wavelength, the ground terminal alone provides high radiation efficiency. In contrast, if the circuit board 103 has a perimeter of more than or equal to 1/2 wavelength and less than or equal to 1 wavelength, the ground terminal alone provides low radiation efficiency.

The conditions (2), (3), and (4) also indicate the following. If the circuit board 103 has a perimeter of more than or equal to 1/2 wavelength and less than or equal to 1 wavelength, the ground terminals 108 and 109 connecting the circuit board 103 with the ground conductor 107 and having the distance S2 of more than or equal to 1/4 wavelength allow the circuit board 103 and the ground conductor 107 to operate as a single large ground that provides the antenna performance having a high radiation efficiency,

If the ground conductor 107 is close to the metallic case of, e.g., a gas meter containing the wireless terminal unit 100, an electromagnetic field of the ground conductor 107 is capacitively coupled to that of the metallic case. This allows the metallic case to operate as a ground of the antenna, thereby providing an improved radiation efficiency and a high antenna performance.

In this embodiment, the radiation conductor 104 and the ground conductor 107 are the sheet metals made of the specified conductor. Alternatively, they may be the copper foil pattern on the printed board.

FIG. 3 illustrates an alternative example, not representing the invention. A wireless terminal unit 300 includes a radiation conductor 304, which is a linear element serving as a linear inverted-L antenna. Similarly to the flat inverted-F antenna in FIG. 1, the linear inverted-L antenna also provides a high radiation efficiency. The resin case is not shown in this figure.

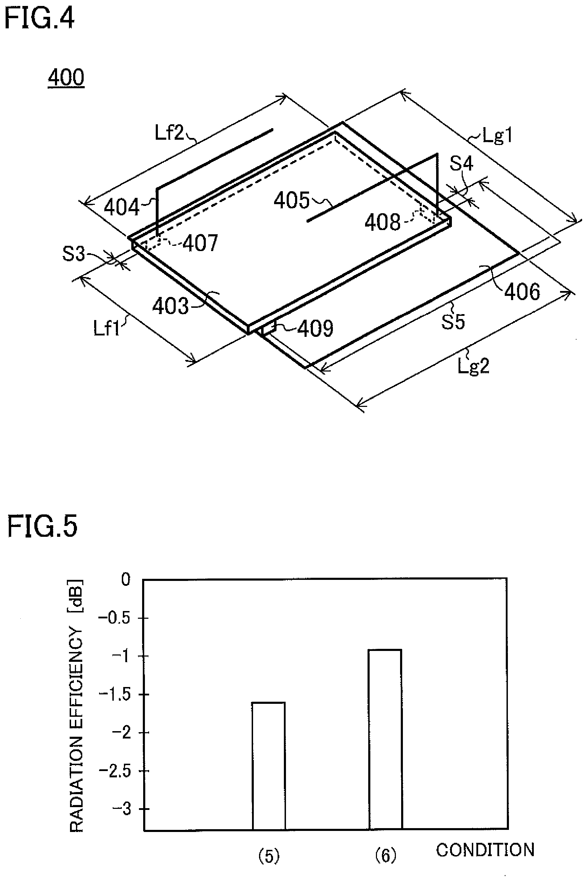

FIG. 4 illustrates a wireless terminal unit 400 of another example not representing the invention. This wireless terminal unit 400 includes a circuit board 403, a first radiation conductor 404, a second radiation conductor 405, a ground conductor 406, a first ground terminal 407, a second ground terminal 408, and a third ground terminal 409. A resin case is not shown in this figure.

The circuit board 403 is, for example, a board having surfaces, both of which are copper surfaces, and having a length Lf1 and a width Lf2. A wireless circuit, a control circuit, etc. are mounted on its surface. The length Lf1 and the width Lf2 constitute a perimeter of the circuit board 403 that is more than or equal to 1/2 wavelength and less than or equal to 1 wavelength at an operating frequency. The first radiation conductor 404 is, for example, a L-shaped linear conductor. The first radiation conductor 404 is orthogonal to a plane of the circuit board 403. One end of the first radiation conductor 404 is electrically connected with the wireless circuit on the circuit board 403. The other end of the first radiation conductor 404 faces and is parallel to the circuit board 403. Similarly to the first radiation conductor 404, the second radiation conductor 405 is, for example, a L-shaped linear conductor. The second radiation conductor 405 is orthogonal to the plane of the circuit board 403. One end of the second radiation conductor 405 is electrically connected with the wireless circuit on the circuit board 403. The other end of the second radiation conductor 405 faces and is parallel to the circuit board 403.

The ground conductor 406 is, for example, a sheet metal having a length Lg1 and a width Lg2. This sheet metal is made of a conductor such as a copper plate. The ground conductor 406 faces and is parallel to a back surface of the circuit board 403, i.e., a surface opposite to the surface on which the first radiation conductor 404 and the second radiation conductor 405 are disposed.

The first ground terminal 407 is orthogonal to a plane of the ground conductor 406. One end of the first ground terminal 407 is electrically connected with the ground on the circuit board 403. This ground has the copper foil pattern. The other end of the first ground terminal 407 is electrically connected with the ground conductor 406. The first ground terminal 407 is also disposed on an edge of the circuit board 403. This edge is at a distance S3 from a position in which the first radiation conductor 404 is connected with the circuit board 403. The distance S3 is preferably a distance that is, for example, less than or equal to 1/16 wavelength at the operating frequency. In other words, the first ground terminal 407 is positioned near a power supply part for the first radiation conductor 404.

Similarly to the first ground terminal 407, the second ground terminal 408 is orthogonal to the plane of the ground conductor 406. One end of the second ground terminal 408 is electrically connected with the ground on the circuit board 403. This ground has the copper foil pattern. The other end of the second ground terminal 408 is electrically connected with the ground conductor 406. The second ground terminal 408 is also disposed on an edge of the circuit board 403. This edge is at a distance S4 from a position in which the second radiation conductor 405 is connected with the circuit board 403. The distance S4 is preferably a distance that is, for example, less than or equal to 1/16 wavelength at the operating frequency. In other words, the second ground terminal 408 is positioned near a power supply part for the second radiation conductor 405.

Similarly to the first ground terminal 407 and the second ground terminal 408, the third ground terminal 409 is orthogonal to the plane of the ground conductor 406. One end of the third ground terminal 409 is electrically connected with the ground on the circuit board 403. This ground has the copper foil pattern. The other end of the third ground terminal 409 is electrically connected with the ground conductor 406. The third ground terminal 409 is also disposed on an edge of the circuit board 403. This edge is at a distance S5 from either the first ground terminal 407 or the second ground terminal 408. For example, the distance S5 may be from the second ground terminal 408. The distance S5 is preferably a distance that is, for example, more than or equal to 1/8 wavelength and less than or equal to 1/4 wavelength at the operating frequency.

Next, the performance of the linear inverted-L antennas of the wireless device 400 in FIG. 4 will be described. This linear inverted-L antennas have a diversity antenna configuration. Here, the operating frequency is 868 MHz. In other words, one wavelength is 345 mm. The specific dimensions of the wireless device 400 in FIG. 4 are as follows. The circuit board 403 has the length Lf1 of 56 mm (0.162 wavelength) and the width Lf2 of 93 mm (0.269 wavelength). The ground conductor 406 has the length Lg1 of 80 mm (0.231 wavelength) and the width Lg2 of 89.5 mm (0.259 wavelength). The distance S3 between the first radiation conductor 404 and the first ground terminal 407 is 7 mm (0.02 wavelength). The distance S4 between the second radiation conductor 405 and the second ground terminal 408 is 7 mm (0.02 wavelength). The distance S5 between the second ground terminal 408 and the third ground terminal 409 is 54 mm (0.156 wavelength). A distance between the ground conductor 406 and the metallic case of, e.g., a gas meter is 2 mm (0.005 wavelength). The circuit board 403 has the perimeter of 298 mm (0.862 wavelength), which is more than or equal to 1/2 wavelength and less than or equal to 1 wavelength. The distance S5 between the second ground terminal 408 and the third ground terminal 409 is 54 mm (0.156 wavelength), which is more than or equal to 1/8 wavelength and less than or equal to 1/4 wavelength.

FIG. 5 shows radiation efficiency of the wireless terminal unit 400 in FIG. 4 and an alternative example. FIG. 5 shows a condition (5) for the radiation efficiency of the alternative example. Under this condition, the circuit board 403 has a perimeter of more than or equal to 1/2 wavelength and less than or equal to 1 wavelength. The third ground terminal 409 in FIG. 4 is not mounted. FIG. 5 also shows a condition (6) for the radiation efficiency of this example. Under this condition, the circuit board 403 has a perimeter of more than or equal to 1/2 wavelength and less than or equal to 1 wavelength. The distance S5 between the second ground terminal 408 and the third ground terminal 409 is more than or equal to 1/8 wavelength and less than or equal to 1/4 wavelength.

The condition (5) indicates the following. If the circuit board 403 in the diversity antenna configuration has a perimeter of more than or equal to 1/2 wavelength and less than or equal to 1 wavelength, the ground terminals 407 and 408 connecting the circuit board 403 with the ground conductor 406 near the first radiation conductor 404 and the second radiation conductor 405 provide the antenna performance having a high radiation efficiency equivalent to that of the first embodiment.

The conditions (5) and (6) also indicate that the circuit board 403 and the ground conductor 406 operate as a large ground that provides the antenna performance having a high radiation efficiency. In this case, the circuit board 403 in the diversity antenna configuration has a perimeter of more than or equal to 1/2 wavelength and less than or equal to 1 wavelength. The first ground terminal 407, the second ground terminal 408, and the third ground terminal 409 connect the circuit board 403 with the ground conductor 406. The distance S5 between the third ground terminal 409 not near the first radiation conductor 404 and the second radiation conductor 405 and one of the first ground terminal 407 or the second ground terminal 408 (e.g., the second ground terminal 408) is a distance of more than or equal to 1/8 wavelength and less than or equal to 1/4 wavelength.

If the ground conductor 406 is close to the metallic case of, e.g., a gas meter containing the wireless terminal unit 400, an electromagnetic field of the ground conductor 406 is capacitively coupled to that of the metallic case. This allows the metallic case to operate as a ground of the antennas, thereby providing an improved radiation efficiency and a high antenna performance.

In this example, the first radiation conductor 404 and the second radiation conductor 405 are linear antenna elements. Alternatively, they may be planar antenna elements.

In this example, the ground conductor 406 is a sheet metal made of a conductor. Alternatively, it may be the copper foil pattern on the printed board.

### INDUSTRIAL APPLICABILITY

The wireless terminal unit of the present invention installed in a metallic case of, e.g., a gas meter has high radiation efficiency independently of its small structure, and is useful to an automatic metering system such as a gas meter.

### DESCRIPTION OF REFERENCE CHARACTERS

- 100: Wireless Terminal Unit
- 101: First Resin Case
- 102: Second Resin Case
- 103: Circuit Board
- 104: Radiation Conductor
- 105: Power Supply Terminal
- 106: Short Terminal
- 107: Ground Conductor
- 108: First Ground Terminal
- 109: Second Ground Terminal
- 300: Wireless Terminal Unit
- 304: Radiation Conductor
- 400: Wireless Terminal Unit
- 403: Circuit Board
- 404: First Radiation Conductor
- 405: Second Radiation Conductor
- 406: Ground Conductor
- 407: First Ground Terminal
- 408: Second Ground Terminal
- 409: Third Ground Terminal

## Claims

1. A wireless terminal unit (100) for wireless communications, the wireless terminal unit (100) comprising:
a wireless circuit board (103);
an antenna element (104) facing one of surfaces of the wireless circuit board (103);
a ground conductor (107) facing the other surface of the wireless circuit board (103); and
a plurality of ground terminals (108, 109) electrically connecting the wireless circuit board (103) with the ground conductor (107), wherein
a first ground terminal (108), one of the plurality of ground terminals (108, 109), is disposed near a power supply part (105) for supplying power from the wireless circuit board (103) to the antenna element (104), and
a second ground terminal (109), another one of the plurality of ground terminals (108, 109), is disposed on a second edge of the wireless circuit board (103),
**characterized in that**:
the first ground terminal (108) is disposed on a first edge of the wireless circuit board (103), said first edge being at a first distance (S1) from a position in which the power supply part (105) is connected with the wireless circuit board (103), said first distance (S1) being a distance which is less than or equal to 1/16 wavelength at the operating frequency;
the wireless circuit board (103) has a perimeter that is more than or equal to 1/2 wavelength and less than or equal to 1 wavelength at an operating frequency;
the second edge is at a second distance (S2) that is more than or equal to 1/4 wavelength at the operating frequency from the first ground terminal (108);
the ground conductor (107) being a sheet metal conductor is larger in plane dimension than the wireless circuit board (103); and
the wireless terminal unit (100) further comprises:
a short terminal (106) for connecting the wireless circuit board (103) with the antenna element (104), one end of the short terminal (106) being electrically connected with a ground of the wireless circuit board (103) and the other end of the short terminal (106) is electrically connected with the antenna element (104).

2. A metering device comprising:
a metallic case; and
the wireless terminal unit (100) according to claim 1.

3. The metering device according to claim 2, wherein the metering device is a gas meter.

## Patentansprüche

1. Ein drahtloses Endgerät (100) für drahtlose Kommunikation, das drahtlose Endgerät (100) enthaltend:
eine Drahtlos-Leiterplatte (103);
ein Antennenelement (104), das einer der Oberflächen der Drahtlos-Leiterplatte (103) gegenüberliegt;
ein Erdungsleiter (107), die der anderen Oberfläche der Drahtlos-Leiterplatte (103) gegenüberliegt; und
eine Vielzahl von Erdungsanschlüssen (108, 109), die die Drahtlos-Leiterplatte (103) mit dem Erdungsleiter (107) verbinden, wobei
ein erster Erdungsanschluss (108), einer aus der Vielzahl der Erdungsanschlüsse (108, 109), nahe einem Energieversorgungsteil (105), um Energie von der Drahtlos-Leiterplatte (103) zu dem Antennenelement (104) zuzuführen, angeordnet ist, und
ein zweiter Erdungsanschluss (109), ein anderer aus der Vielzahl der Erdungsanschlüsse (108, 109), an einer zweiten Kante der Drahtlos-Leiterplatte (103) angeordnet ist, **dadurch gekennzeichnet, dass**:
der erste Erdungsanschluss (108) an einer ersten Kante der Drahtlos-Leiterplatte (103) angeordnet ist, wobei die besagte erste Kante einen ersten Abstand (S1) von einer Position, an der das Energieversorgungsteil (105) mit der Drahtlos-Leiterplatte (103) verbunden ist, hat, wobei der besagte erste Abstand (S1) ein Abstand ist, der kleiner odergleich 1/16 Wellenlänge bei der Betriebsfrequenz ist;
die Drahtlos-Leiterplatte (103) einen Umfang hat, der größer oder gleich 1/2 Wellenlänge und kleiner oder gleich 1 Wellenlänge bei einer Betriebsfrequenz ist;
die zweite Kante einen zweiten Abstand (S2) von dem ersten Erdungsanschluss (108) hat, der größer oder gleich 1/4 Wellenlänge bei der Betriebsfrequenz ist;
der Erdungsleiter (107), der ein Metallblechleiter ist, in der Ebenendimension größer ist als die Drahtlos-Leiterplatte (103); und
das drahtlose Endgerät (100) weiter enthält:
einen Kurzanschluss (106) zum Verbinden der Drahtlos-Leiterplatte (103) mit dem Antennenelement (104), wobei ein Ende des Kurzanschlusses (106= elektrisch mit einer Erdung der Drahtlos-Leiterplatte (103) verbunden ist und das andere Ende des Kurzanschlusses (106) elektrisch mit dem Antennenelement (104) verbunden ist.

2. Ein Messgerät enthaltend:
ein metallisches Gehäuse; und
das drahtlose Endgerät (100) gemäß Anspruch 1.

3. Das Messgerät gemäß Anspruch 2, wobei das Messgerät ein Gaszähler ist.

## Revendications

1. Unité de terminal sans fil (100) pour communications sans fil, l'unité de terminal sans fil (100) comprenant :
une carte de circuit sans fil (103) ;
un élément antenne (104) faisant face à une de surfaces de la carte de circuit sans fil (103) ;
un conducteur de mise à la terre (107) faisant face à l'autre surface de la carte de circuit sans fil (103) ; et
une pluralité de bornes de mise à la terre (108, 109) connectant électriquement la carte de circuit sans fil (103) au conducteur de mise à la terre (107), dans laquelle
une première borne de mise à la terre (108), une de la pluralité de bornes de mise à la terre (108, 109), est disposée près d'une partie d'alimentation en énergie électrique (105) pour effectuer l'alimentation en énergie électrique depuis la carte de circuit sans fil (103) à l'élément antenne (104), et
une seconde borne de mise à la terre (109), une autre de la pluralité de bornes de mise à la terre (108, 109), est disposée sur un second bord de la carte de circuit sans fil (103),
**caractérisée en ce que** :
la première borne de mise à la terre (108) est disposée sur un premier bord de la carte de circuit sans fil (103), ledit premier bord étant à une première distance (S1) d'une position dans laquelle la partie d'alimentation en énergie électrique (105) est connectée à la carte de circuit sans fil (103), ladite première distance (S1) étant une distance qui est inférieure ou égale à 1/16 longueur d'onde à la fréquence de fonctionnement ;
la carte de circuit sans fil (103) a un périmètre qui est supérieur ou égal à 1/2 longueur d'onde et inférieure ou égale à 1 longueur d'onde à une fréquence de fonctionnement ;
le second bord est à une seconde distance (S2), qui est supérieure ou égale à 1/4 longueur d'onde à la fréquence de fonctionnement, de la première borne de mise à la terre (108) ;
le conducteur de mise à la terre (107), qui est un conducteur en tôle, est plus grand en dimension en plan que la carte de circuit sans fil (103) ; et
l'unité de terminal sans fil (100) comprend en outre :
une borne de court-circuit (106) pour connecter la carte de circuit sans fil (103) à l'élément antenne (104), une extrémité de la borne de court-circuit (106) étant électriquement connectée à une mise à la terre de la carte de circuit sans fil (103) et l'autre extrémité de la borne de court-circuit (106) est électriquement connectée à l'élément antenne (104).

2. Dispositif de mesure, comprenant :
un boîtier métallique ; et
l'unité de terminal sans fil (100) selon la revendication 1.

3. Dispositif de mesure selon la revendication 2, dans lequel le dispositif de mesure est un compteur à gaz.
